# EUROPÄISCHE PATENTSCHRIFT

(11) **EP 0 865 643 B1**
(45) Veröffentlichungstag und Bekanntmachung des Hinweises auf die Patenterteilung: **25.08.1999**
(21) Anmeldenummer: 96941638.7
(22) Anmeldetag: 02.12.1996
(51) Int. Cl.: G07F 7/12

(54) **Verfahren bei einer Benutzung einer Chipkarte mit vierstufigem Schaltwerk**
Method of using an IC card comprising a four-state circuit
Procédé pour utiliser une carte à puce comportant un circuit à quatre états

(30) Priorität: 07.12.1995 CH 345295
(43) Veröffentlichungstag der Anmeldung: 23.09.1998
(73) Patentinhaber: Landis & Gyr Technology Innovation AG, 6301 Zug (CH)
(72) Erfinder: CAMBOIS, Etienne, F-26120 Montmeyran (FR); ROCHE, Alexandre, F-26000 Valence (FR); DEBELLEIX, Olivier, F-26000 Valence (FR)
(86) Internationale Anmeldenummer: EP9605341
(87) Internationale Veröffentlichungsnummer: WO9721198

(56) Entgegenhaltungen:
- EP-A- 0 570 828
- EP-A- 0 570 924
- EP-A- 0 607 950
- EP-A- 0 621 570
- WO-A-89/02140

## Beschreibung

Die Erfindung bezieht sich auf ein Verfahren bei einer Benutzung einer Chipkarte gemäss dem Oberbegriff des Anspruchs 1.

Das erfindungsgemässe Verfahren wird vor allem verwendet in fremdbetriebenen Verkaufsautomaten, deren Betreiber nicht identisch sind mit den Verkäufern oder Weiterverkäufern der Chipkarten, die als bargeldloses Zahlungsmittel in den betreffenden Verkaufsautomaten verwendet werden. Die Verkaufsautomaten sind vorzugsweise Waren- oder Dienstleistungs-Verkaufsautomaten, wobei die letzteren bevorzugt Telefonstationen sind.

Bekannt sind Chipkarten der sogenannten dritten Generation, die den Karteninhalt jeweils in eine kryptografische Operation einfliessen lassen können zum Beweis der Echtheit der Chipkarte. Beispiele solcher Chipkarten sind die bekannten SLE 443X der Firma Siemens.

Gemäß EP-A-0 570 924 sendet ein Auswertegerät (Terminal) Fragedaten an eine Chipkarte (Datenträgeranordnung) und überprüft die Chipkarten-Antwort darauf, ob sie nach einem (geheimen) Algorithmus erzeugt wurde, den eine echte Karte ausführt. Um zu verhindern, daß der Algorithmus durch Beobachtung vieler zusammengehöriger Frage- und Antwortdaten ausgeforscht wird, schlägt die Entgegenhaltung insbesondere vor, die Zahl dieser Authentisierungsversuche zu begrenzen. Ferner soll das Verändern der Fragedaten (d.h. die Erzeugung der Antwortdaten) von in der Datenträgeranordnung enthaltenen Informationen abhängen, etwa vom rücksetzbaren Stand eines Schaltwerks (Authentifikationszählers) oder von einem Kontostand.

Der Erfindung liegt die Aufgabe zugrunde, das in den bekannten Chipkarten der dritten Generation verwendete kryptografische Verfahren so zu verbessern,
- dass nicht nur die Echtheit der Chipkarte, sondern auch die Höhe eines abgebuchten Geldbetrages kryptografisch gesichert wird und
- dass überhöhte in Rechnung gestellte Verrechnungsbeträge eines Fremdbetreibers zuhanden der Kartenverkäufer bzw. Kartenweiterverkäufer, die durch in betrügerischer Absicht getätigte missbräuchliche Benutzungen der Chipkarten verursacht werden, verhindert werden, so dass den Verrechnungsbeträgen zwangsweise jeweils gleichwertige Abbuchungen der Chipkarten gegenüber stehen.

Die genannte Aufgabe wird erfindungsgemäss durch die im Anspruch 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: ein prinzipielles Schaltbild eines Auswertegerätes eines Verkaufsautomaten, in dessen Kartenschlitz eine erfindungsgemässe Chipkarte steckt,
- Fig. 2: ein Schaltbild einer bekannten, möglichen Anordnung zur Erzeugung eines durch ein Zufallssignal ausgelösten Antwortsignals und
- Fig. 3: ein prinzipielles Schaltbild eines vier Zustände aufweisenden Schaltwerkes.

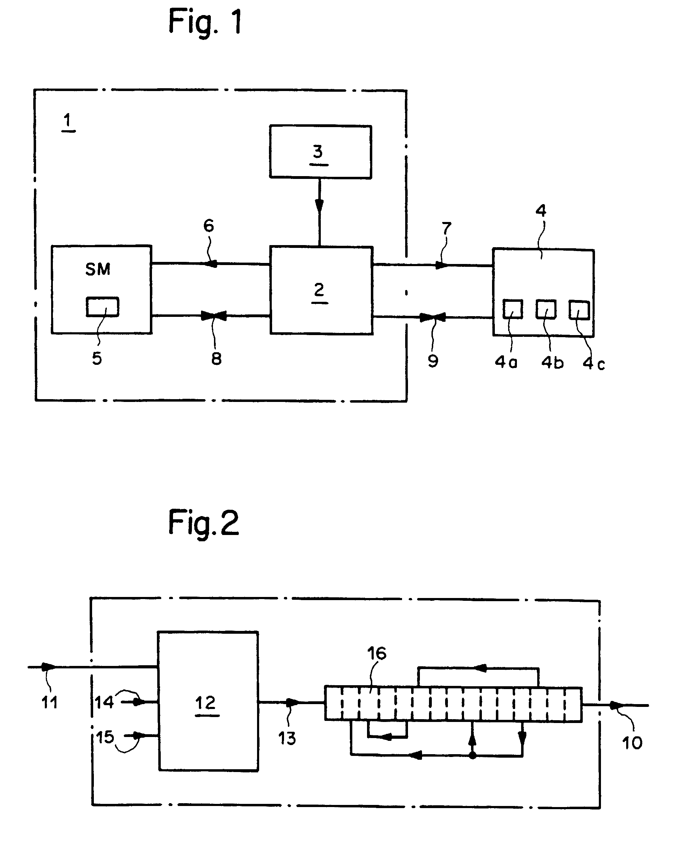

Die Verkaufsautomaten sind, wie bereits erwähnt, vorzugsweise Waren- oder Dienstleistungs-Verkaufsautomaten, wobei die letzteren bevorzugt Telefonstationen sind. Die Verkaufsautomaten enthalten ein Auswertegerät 1, welches seinerseits ein Terminal 2, ein Sicherheitsmodul SM und eine Speisung 3 enthält zum Speisen der elektronischen Schaltungen sowohl des Auswertegerätes 1 als auch einer Chipkarte 4, falls diese in einem Kartenschlitz des Verkaufsautomaten gesteckt ist (siehe Fig. 1). Das Sicherheitsmodul enthält einen Verrechnungszähler 5 zum akkumulieren von Verrechnungsbeträgen, die ein Betreiber des Verkaufsautomaten einem Verkäufer bzw. Weiterverkäufer der Chipkarten 4 in Rechnung stellen kann. Die Speisung 3 speist das Sicherheitsmodul SM und die Chipkarte 4 mit Energie 6 bzw. 7 über das Terminal 2, welches die Speisung der Chipkarte ein- und ausschalten kann. Informationen 8 oder 9 werden in beiden Übertragungsrichtungen zwischen dem Terminal 2 und dem Sicherheitsmodul SM bzw. zwischen dem Terminal 2 und der Chipkarte 4 übertragen. Auf den Chipkarten 4 ist jeweils ein Geldwert-Zähler 4a und ein Schaltwerk 4b ("state machine", "machine d'état", Zustandsmaschine) vorhanden. Ausserdem ist auf den Chipkarten 4 vorzugsweise jeweils noch ein Speiseeinschalt-Zähler 4c vorhanden, der im Prinzip die Anzahl Speiseeinschaltungen der Chipkarte 4 zählt, denen die letztere seit einer ersten Inbetriebnahme (Zählwert x = 0) bis zum betreffenden Augenblick (Zählwert x) ausgesetzt war.

Zur Erzeugung eines Antwortsignals 10 mittels eines Zufallssignals 11 ist auf der Chipkarte 4 und im Sicherheitsmodul SM je eine kryptografische Anordnung vorhanden. Das Zufallssignal 11 ist bevorzugt eine Zufallsbitfolge. Die kryptografische Anordnung ist eine beliebige von vielen bekannten Anordnungen dieser Art, wovon eine mögliche Anordnung in der Fig. 2 dargestellt ist. Diese enthält eine Verknüpfungsanordnung 12 zur Erzeugung eines Aufrufsignals 13, welches eine Funktion des Zufallsignals 11, von Identifikationsangaben 14 der Chipkarte 4 und einer Geldwertangabe 15 ist. Auf der Chipkarte 4 entspricht die Geldwertangabe 15 dem im Geldwert-Zähler 4a enthaltenen Geldwert. Die Angaben 14 und 15 sind auf einen ersten bzw. zweiten Eingang der Verknüpfungsanordnung 12 geführt, während das Zufallssignal 11 vom Sicherheitsmodul SM über das Terminal 2 kommend einen dritten Eingang der Verknüpfungsanordnung 12 speist. Das am Ausgang der Verknüpfungsanordnung 12 anstehende Aufrufsignal 13 ist ein serielles Eingangssignal eines mit Rückkopplungen versehenen Schieberegisters 16, welches mit seinen Rückkopplungen einen Algorithmus darstellt. Im Schieberegister 16 ist zu Beginn einer jeden Authentifizierung ein Chipkarten-Codeschlüssel gespeichert. Ein an einem seriellen Ausgang des Schieberegisters 16 erzeugtes Ausgangssignal ist das Antwortsignal 10 des Schieberegisters 16 auf das Aufrufsignal 13. Es ist eine Funktion des Chipkarten-Codeschlüssels, des Algorithmus sowie des Aufrufsignals 13 und damit auch eine Funktion des Zufallssignals 11, der Identifikationsangaben 14 sowie der Geldwertangabe 15. Der Chipkarten-Codeschlüssel, der Algorithmus sowie die Angaben 14 und 15 stellen zusammen ein Abbild der bekannten Chipkarte 4 dar. Weitere Details sind aus der EP 0 616 429 A1 und der EP 0 624 839 A1 ersichtlich.

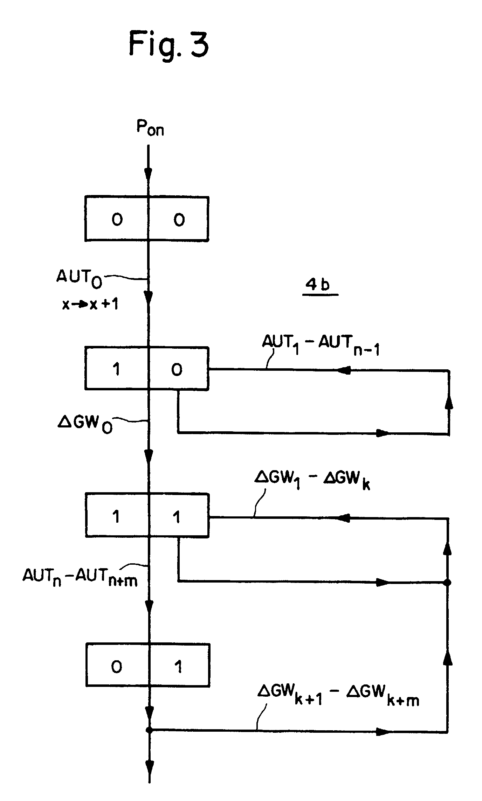

Das Schaltwerk 4b weist mindestens vier Zustände auf(siehe Fig. 3), die z. B. fortlaufend von Null bis Drei durchnummeriert sind. Die fortlaufenden Nummern sind z. B. 2 Bit-Binärzahlen, die auf der Chipkarte 4 in zwei Speicherzellen eines RAM-Speichers ("Random Access Memory"), also eines Schreib/Lese-Speichers gespeichert sind. Nachfolgend gilt somit die Annahme, dass das Schaltwerk 4b mindestens einen ersten Zustand 00, einen zweiten Zustand 10, einen dritten Zustand 11 und einen vierten Zustand 01 aufweist, die alle vier während eines Betriebs in der angegebenen Reihenfolge durchlaufen werden. In erfindungsgemässen Authentifizierungen AUT₀ bis_AUTₙ₊ₘ wird jeweils ein zu deren Beginn gerade vorhandener Zustandswert des Schaltwerkes 4b bei der Erzeugung von Sollwert- und Istwert-Antwortsignalen mitberücksichtigt, so dass die beiden letzteren jeweils auch eine Funktion dieses Zustandswertes sind. Der erste Zustand 00 ist jeweils ein definierter Ausgangszustand des Schaltwerkes 4b, der vom letzteren nach jedem Einschalten P_{On} der Chipkarten-Speisung eingenommen wird. Der zweite Zustand 10 ist derjenige, der vom Schaltwerk 4b nach der Auslösung einer ersten Authentifizierung AUT₀ angenommen und auf der Chipkarte 4 am Ende eines der ersten Authentifizierung AUT₀ zugehörigen ersten Zufallssignals erzeugt wird, wenn das Schaltwerk 4b sich im ersten Zustand 00 befindet. Im zweiten Zustand 10 sind - ohne Zustandsänderungen des Schaltwerkes 4b - fakultativ noch zusätzliche Authentifizierungen AUT₁ bis AUTₙ₋₁ durch das Auswertegerät 1 initiierbar unter Benutzung des gleichen Chipkarten-Geldwertes wie bei der ersten Authentifizierung AUT₀. Der dritte Zustand 11 ist derjenige, der vom Schaltwerk 4b nach einer ersten Reduzierung ΔGW₀ des Chipkarten-Geldwertes angenommen wird, wobei die erste Reduzierung ΔGW₀ auf der Chipkarte 4 durchgeführt wird, wenn sich das Schaltwerk 4b im zweiten Zustand 10 befindet. Im dritten Zustand 11 können - ohne Zustandsänderungen des Schaltwerkes 4b - fakultativ noch zusätzliche Reduzierungen ΔGW₁ bis ΔGWₖ des Chipkarten-Geldwertes durch das Auswertegerät 1 veranlasst werden. Der vierte Zustand 01 ist derjenige, der vom Schaltwerk 4b nach der Auslösung einer weiteren Authentifizierung AUTₙ angenommen und auf der Chipkarte 4 am Ende eines der weiteren Authentifizierung AUTₙ zugehörigen weiteren Zufallssignals erzeugt wird, wenn das Schaltwerk 4b sich im dritten Zustand 11 befindet. Wenn im vierten Zustand 01 noch eine weitere Reduzierung ΔGWₖ₊₁ des Chipkarten-Geldwertes durch das Auswertegerät 1 veranlasst wird, nimmt das Schaltwerk 4b vorher wieder den dritten Zustand 11 an.

Bei einem Vorhandensein des Speiseeinschalt-Zählers 4c wird dessen Zählwert x nach einem Einschalten der Chipkarten-Speisung jeweils zu Beginn der ersten nachfolgenden Authentifizierung AUT₀ oder kurz vor deren Auslösung um einen bestimmten vorgegebenen Wert, vorzugsweise Eins, inkrementiert. Nachfolgend gilt die Annahme, dass die Inkrementation jeweils um den Wert Eins erfolgt. In den Authentifizierungen AUT₀ bis AUTₙ₊ₘ wird dann jeweils der gerade geltende Zählwert x+1 bei der Erzeugung des zugehörigen Sollwert- und Istwert-Antwortsignals mitberücksichtigt, so dass die beiden letzteren jeweils auch eine Funktion des geltenden Zählwertes x+1 sind. Der Speiseeinschalt-Zähler 4c besteht z. B. aus einem 16 Bit E²PROM ("Electrical Erasable Programmable Read Only Memory"), also eines elektrisch programmierbaren Festwertspeichers. Der nicht dekrementierbare Speiseeinschalt-Zähler 4c zählt dann bis zu einem Maximalwert 2¹⁶ = 65.536.

Das erfindungsgemässe Verfahren beinhaltet folgenden zeitlichen Ablauf:
- Wenn bei einer Benutzung die Chipkarte 4 als bargeldloses Zahlungsmittel in einen Kartenschlitz eines Verkaufsautomaten gesteckt worden ist, schaltet das Terminal 2 die Speisung der Chipkarte 4 ein, was eine Rückstellung auf Null des RAM-Speichers der Chipkarte 4 und damit auch eine Rückstellung der beiden Speicherzellen veranlasst, in welche die 2 Bit-Binärzahl gespeichert ist, die den Zustand des Schaltwerkes 4b darstellt. D. h. das letztere nimmt auf der Chipkarte 4 den Zustand 00 an.
- Das Terminal 2 liest anschliessend ein Abbild der Chipkarte 4, d. h. deren Identifikationsangaben 14, deren im Geldwert-Zähler 4a zu diesem Zeitpunkt gespeicherten Chipkarten-Geldwert (d. h. die Geldwertangabe 15) sowie, falls vorhanden, den Zählwert x des Speiseeinschalt-Zählers 4c, und leitet dieses Abbild mit einem Initiierungssignal "INIT_AUT" weiter an das Sicherheitsmodul SM. Im letzteren ist der gleiche Algorithmus vorhanden wie auf der Chipkarte 4. Aus den empfangenen Identifikationsangaben 14 leitet das Sicherheitsmodul SM den Chipkarten-Codeschlüssel ab.
- Nach dem Lesen des Abbildes der Chipkarte 4 durch das Auswertegerät 1 und seiner Weiterleitung an das Sicherheitsmodul SM sowie
- nach dem im Auswertegerät 1 durchgeführten Ableiten des Chipkarten-Codeschlüssels aus den empfangenen Identifikationsangaben 14
- wird die Chipkarte 4 zu Beginn einer Benutzung einer mittels des Initiierungssignals "INIT_AUT" ausgelösten ersten Authentifizierung AUT₀ unterzogen zwecks Feststellung einer Kartenechtheit.
- D. h.: Der Empfang des Initiierungssignals "INIT_AUT" im Sicherheitsmodul SM hat dort zur Folge, dass der augenblickliche Zustand YY des Schaltwerkes 4b vom Sicherheitsmodul SM gleich 00 angenommen wird, dass der Zählwert x in x+1 geändert wird und ein erstes Zufallssignal erzeugt wird, welches letzteres seriell über das Terminal 2 der Chipkarte 4 zugeleitet wird. Ausserdem wird im Sicherheitsmodul SM mittels des ersten Zufallsignals, der Identifikationsangaben 14, des Chipkarten-Geldwertes, des Algorithmus, des Chipkarten-Codeschlüssels sowie der Werte x+1 und YY = 00 ein erstes Sollwert-Antwortsignal erzeugt.
- Mit dem Empfang z. B. eines ersten Impulses des ersten Zufallssignals wird der Zählwert des Speiseeinschalt-Zählers 4c auf der Chipkarte 4 um einen Wert Eins inkrementiert, so dass sein neuer Wert x+1 ist.
- Auf einer gleichen oder ähnlichen Weise wie das erste Sollwert-Antwortsignal im Sicherheitsmodul SM erzeugt wird, wird auf der Chipkarte 4 mit Hilfe des ersten Zufallssignals ein Istwert-Antwortsignal erzeugt, welches über das Terminal 2 dem Sicherheitsmodul SM zugeleitet wird. Das Istwert-Antwortsignal ist genau wie das Sollwert-Antwortsignal eine Funktion des ersten Zufallsignals, der Identifikationsangaben 14, des Chipkarten-Geldwertes, des Algorithmus, des Chipkarten-Codeschlüssels sowie der Werte x+1 und YY = 00. Ein z. B. letzter Impuls des Istwert-Antwortsignals veranlasst, dass YY auf der Chipkarte 4 den Wert 10 annimmt.
- Im Sicherheitsmodul SM werden das Sollwert- und Istwert-Antwortsignal miteinander verglichen. Bei vorhandener Kartenechtheit sind beide Antwortsignale gleich und YY nimmt im Sicherheitsmodul SM ebenfalls den Wert 10 an.
- Im Zustand 10 kann das Terminal 2 des Auswertegerätes 1 noch beliebig viele weitere Authentifizierungen AUT₁ bis AUTₙ₋₁ auslösen und durchführen. Die Werte x+1 und YY = 10 bleiben während diesen weiteren Authentifizierungen unverändert.
- Bei einer anlässlich der letzten der durchgeführten Authentifizierungen erkannten Kartenechtheit veranlasst das Terminal 2 ein Abbuchen des Geldwertes ΔGW₀ der verkauften Ware oder Dienstleistung im Geldwert-Zähler 4a der Chipkarte 4. Dessen ursprünglicher Geldwert wird somit um den Geldwert ΔGW₀ reduziert. Anschliessend nimmt das Schaltwerk 4b auf der Chipkarte 4 den Zustand 11 an.
- In der Praxis kann es geschehen, dass im Zustand YY = 11 des Schaltwerkes 4b kurz nacheinander mehrere Geldwert-Abbuchungen ΔGW₁ bis ΔGWₖ verkaufter Waren oder Dienstleistungen erfolgen, bevor eine nächste Authentifizierung ausgelöst wird.
- Bei erkannter Kartenechtheit und nach mindestens einer, durch Waren- oder Dienstleistungsbezug bedingten Reduzierung ΔGW₁ bzw. ΔGWₖ des im Geldwert-Zähler 4a der Chipkarte 4 enthaltenen Chipkarten-Geldwertes wird die Chipkarte 4 einer weiteren Authentifizierung AUTₙ unterzogen zwecks Feststellung, ob und um welchen Betrag der Chipkarten-Geldwert reduziert wurde. Zu diesem Zweck liest das Terminal 2 den neuen, im Geldwert-Zähler 4a enthaltenen Chipkarten-Geldwert und leitet diesen mit einem Initiierungssignal "Erhöhe Inhalt des Verrechnungszählers 5" weiter an das Sicherheitsmodul SM, in welchem nun YY den Zustandswert 11 annimmt.
- Diese weitere Authentifizierung erfolgt auf eine gleiche oder ähnliche Weise wie die erste, d. h. ein weiteres Zufallsignal wird im Sicherheitsmodul SM erzeugt und über das Terminal 2 an die Chipkarte 4 weitergeleitet. Mittels dieses letzteren Zufallsignals wird im Sicherheitsmodul SM und auf der Chipkarte 4 wieder ein Sollwert- bzw. Istwert- Analogsignal erzeugt, welche beide diesmal ein Funktion des neuen Zufallsignals, der Identifikationsangaben 14, des neuen Chipkarten-Geldwertes, des Algorithmus, des Chipkarten-Codeschlüssels sowie der Werte x+1 und YY = 11 ist.
- Das neue Istwert-Antwortsignal wird über das Terminal 2 dem Sicherheitsmodul SM zugeleitet, wo es mit dem dort erzeugten neuen Sollwert-Antwortsignal verglichen wird. Der z. B. letzte Impuls des neuen Istwert-Antwortsignals veranlasst auf der Chipkarte 4, dass das Schaltwerk 4b den Zustand YY = 01 annimmt.
- Bei Übereinstimmung der beiden Antwortsignale wird im Sicherheitsmodul SM des Auswertegerätes 1 ein im Verrechnungszähler 5 enthaltener Geldwert um den gleichen Betrag erhöht, um den der im Geldwert-Zähler 4a der Chipkarte 4 enthaltene Chipkarten-Geldwert reduziert wurde.
- Weitere Geldwertabbuchungen ΔGWₖ₊₁ bis ΔGWₖ₊ₘ sind im Zustand YY = 01 des Schaltwerkes 4b möglich und können vom Terminal 2 verlanlasst werden, wenn zusätzliche Waren oder Dienstleistungen vom Benutzer der Chipkarte bezogen werden. Die Geldwert-Abbuchungen geschehen dabei jeweils unter vorheriger Rückschaltung des Schaltwerkes 4b aus dem Zustand YY = 01 in den Zustand Y = 11. Wenn das Schaltwerk einmal den Zustand 01 erreicht hat, ist somit ohne vorherige Geldwert-Abbuchung keine Authentifizierung und damit keine Erhöhung des Inhaltes des Verrechnungszählers 5 mehr möglich. Wenn die Speisung von der Chipkarte 4 genommen wird ("Power_{off}"), verliert der RAM-Speicher der Chipkarte 4 und damit auch dessen beide Speicherzellen, in denen der Wert von YY gespeichert ist, seinen bzw. ihren Wert.
- Das nächste Mal, wenn die Speisung der Chipkarte 4 wieder eingeschaltet wird, beginnt der oben beschriebene Zyklus aufs neue.

Zusammengefasst sei noch einmal bemerkt, dass bei allen Authentifizierungen AUT₀ bis AUTₙ₊ₘ jeweils mittels eines der betreffenden Authentifizierung zugehörigen und vom Auswertegerät 1 zugeführten Zufallssignals auf der Chipkarte 4 ein Istwert-Antwortsignal erzeugt wird, welches ausser einer Funktion des betreffenden Zufallsignals noch eine Funktion unter anderem, ganz oder teilweise, der Chipkarten-Identifikationsangaben 14, des im Geldwert-Zähler 4a der Chipkarte 4 jeweils noch enthaltenen Chipkarten-Geldwertes, des Chipkarten-Codeschlüssels und des Algorithmus der Chipkarte 4 ist, welche alle vier ein Teil von deren Abbild sind, zu dem im übrigen auch noch der Zustand YY des Schaltwerkes 4b und, falls vorhanden, der Zählwert x gehört. Das Istwert-Antwortsignal ist somit ebenfalls eine Funktion der beiden letzteren. Während der Authentifizierungen AUT₀ bis AUTₙ₊ₘ wird jeweils das Istwert-Antwortsignal mit einem auf ähnliche Weise im Auswertegerät 1 durch das gleiche Zufallssignal erzeugten Sollwert-Antwortsignal verglichen.

Wenn das Terminal 2 in missbräuchlicher Weise den Inhalt des Verrechnungszählers 5 erneut erhöhen will ohne den Chipkarten-Geldwert der Chipkarte 4 abgebucht zu haben, wird im Sicherheitsmodul YY den Wert 11 annehmen, während YY auf der Chipkarte 4 den Wert 01 behält.

Sollwert und Istwert des Antwortsignals würden nichtübereinstimmem. Desgleichen wird, wenn das Terminal 2 in missbräuchlicher Weise die Speisung der Chipkarte 4 aus- und dann wieder einschaltet, die nachfolgende Authentifikation den Zählwert x des Speiseeinschalt-Zählers 4c inkrementieren, so dass die Werte von x im Sollwert- und Istwert-Antwortsignal und damit auch diese beiden Antwortsignale nicht mehr übereinstimmen. Eine korrekte Funktion des jeweiligen Zyklus ist somit nur solange gewährleistet, wie das Schaltwerk 4b und, falls vorhanden, der Speiseeinschalt-Zähler 4c anlässlich der Authentifizierungs-Initiierungen jeweils einen korrekten Wert aufweisen. Eine Erhöhung der Verrechnungszähler 5 mehrerer Sicherheitsmodule SM mit einer gleichen Chipkarte 4 ist z. B. nicht mehr möglich, so dass ein damit verbundener Missbrauch verhindert wird.

## Patentansprüche

1. Verfahren
- bei einer Benutzung einer Chipkarte (4) als bargeldloses Zahlungsmittel in Verkaufsautomaten,
- welche Chipkarte (4) zu Beginn der Benutzung
- nach einem Lesen eines Abbildes der Chipkarte (4) durch ein Auswertegerät (1) und
- nach einem im letzteren durchgeführten Ableiten eines Chipkarten-Codeschlüssels
- einer ersten Authentifizierung (AUT₀) unterzogen wird zwecks Feststellung einer Kartenechtheit und
- welche bei erkannter Kartenechtheit nach mindestens einer, durch Waren- oder Dienstleistungsbezug bedingten Reduzierung (ΔGW₀ bzw. ΔGWₖ) eines in einem Geldwert-Zähler (4a) der Chipkarte (4) enthaltenen Chipkarten-Geldwertes
- einer weiteren Authentifizierung (AUTₙ) unterzogen wird zwecks Feststellung, ob und um welchen Betrag der Chipkarten-Geldwert reduziert wurde,
- worauf anschliessend im Auswertegerät (1) ein in einem Verrechnungszähler (5) enthaltener Geldwert um den gleichen Betrag erhöht wird, um den der im Geldwert-Zähler (4a) der Chipkarte (4) enthaltene Chipkarten-Geldwert reduziert wurde,
- wobei während der Authentifizierungen jeweils mittels eines der betreffenden Authentifizierung zugehörigen und vom Auswertegerät (1) zugeführten Zufallssignals auf der Chipkarte (4) ein Istwert-Antwortsignal erzeugt wird,
- welches ausser einer Funktion des betreffenden Zufallsignals noch eine Funktion unter anderem, ganz oder teilweise, von Chipkarten-Identifikationsangaben (14), des im Geldwert-Zähler (4a) der Chipkarte (4) jeweils noch enthaltenen Chipkarten-Geldwertes, des Chipkarten-Codeschlüssels und eines Algorithmus der Chipkarte (4) ist, welche alle vier ein Teil des Abbildes der Chipkarte (4) sind, und
- welches während der Authentifizierungen jeweils mit einem auf ähnliche Weise im Auswertegerät (1) durch das gleiche Zufallssignal erzeugten Sollwert-Antwortsignal verglichen wird,
dadurch gekennzeichnet,
- dass auf der Chipkarte (4) ein Schaltwerk (4b) vorhanden ist,
- welches mindestens einen ersten, zweiten, dritten und vierten Zustand (00, 10, 11, 01) aufweist,
- dass in den Authentifizierungen jeweils ein zu deren Beginn gerade vorhandener Zustandswert des Schaltwerkes (4b) bei der Erzeugung der Sollwert- und Istwert-Antwortsignale mitberücksichtigt wird, so dass die beiden letzteren jeweils auch eine Funktion dieses Zustandswertes sind,
- dass der erste Zustand (00) jeweils ein definierter Ausgangszustand des Schaltwerkes (4b) ist, der vom letzteren nach jedem Einschalten (P_{On}) der Chipkarten-Speisung eingenommen wird,
- dass der zweite Zustand (10) derjenige ist, der vom Schaltwerk (4b) nach der Auslösung der ersten Authentifizierung (AUT₀) angenommen und auf der Chipkarte (4) am Ende eines der ersten Authentifizierung (AUT₀) zugehörigen ersten Zufallssignals erzeugt wird, wenn das Schaltwerk (4b) sich im ersten Zustand (00) befindet,
- dass der dritte Zustand (11) derjenige ist, der vom Schaltwerk (4b) nach einer ersten Reduzierung (ΔGW₀) des Chipkarten-Geldwertes angenommen wird, wobei die erste Reduzierung (ΔGW₀) auf der Chipkarte (4) durchgeführt wird, wenn sich das Schaltwerk (4b) im zweiten Zustand (10) befindet, und
- dass der vierte Zustand (01) derjenige ist, der vom Schaltwerk (4b) nach der Auslösung der weiteren Authentifizierung (AUTₙ) angenommen und auf der Chipkarte (4) am Ende eines der weiteren Authentifizierung (AUTₙ) zugehörigen weiteren Zufallsignals erzeugt wird, wenn das Schaltwerk (4b) sich im dritten Zustand (11) befindet.

2. Verfahren nach Anspruch 1, dadurch gekennzeichnet, dass im zweiten Zustand (10) ohne Zustandsänderungen des Schaltwerkes (4b) noch zusätzliche Authentifizierungen (AUT₁ bis AUTₙ₋₁) durch das Auswertegerät (1) initiierbar sind unter Benutzung des gleichen Chipkarten-Geldwertes wie bei der ersten Authentifizierung (AUT₀).

3. Verfahren nach Anspruch 1 oder 2, dadurch gekennzeichnet, dass im dritten Zustand (11) ohne Zustandsänderungen des Schaltwerkes (4b) noch zusätzliche Reduzierungen (ΔGW₁ bis ΔGWₖ) des Chipkarten-Geldwertes durch das Auswertegerät (1) veranlasst werden.

4. Verfahren nach einem der Ansprüche 1 bis 3, dadurch gekennzeichnet, dass, wenn im vierten Zustand (01) noch eine weitere Reduzierung (ΔGWₖ₊₁) des Chipkarten-Geldwertes durch das Auswertegerät (1) veranlasst wird, das Schaltwerk (4b) vorher wieder den dritten Zustand (11) annimmt.

5. Verfahren nach einem der Ansprüche 1 bis 4, dadurch gekennzeichnet,
- dass auf den Chipkarten (4) jeweils ein Speiseeinschalt-Zähler (4c) vorhanden ist, dessen Zählwert (x) nach einem Einschalten der Chipkarten-Speisung, zu Beginn der ersten nachfolgenden Authentifizierung (AUT₀) auf der Chipkarte (4) oder kurz vor deren Auslösung auf der Chipkarte (4), jeweils um einen Wert inkrementiert wird, und
- dass in den Authentifizierungen (AUT₀ bis AUTₙ₊ₘ) jeweils der gerade geltende Zählwert (x+1) bei der Erzeugung des Sollwert- und Istwert-Antwortsignals mitberücksichtigt wird, so dass die beiden letzteren jeweils auch eine Funktion des geltenden Zählwertes (x+1) sind.

6. Verfahren nach einem der Ansprüche 1 bis 5, dadurch gekennzeichnet, dass die Verkaufsautomaten Waren- oder Dienstleistungs-Verkaufsautomaten sind.

7. Verfahren nach Anspruch 6, dadurch gekennzeichnet, dass die Dienstleistungs-Verkaufsautomaten Telefonstationen sind.

## Claims

1. A method
- in a use of a chip card (4) as cash-less payment means in automatic sales machines.
- which chip card (4) at the beginning of the use
- after reading of an image of the chip card (4) by an evaluation unit (1) and
- after derivation, effected in the latter, of a chip card code key.
- is subjected to a first authentification operation (AUT₀) for the purposes of establishing card authenticity and
- which when card authenticity is recognised, after at least one reduction (ΔGW₀ and ΔGWₖ), caused by article or service purchase, in a chip card money value contained in a money value counter (4a) of the chip card (4),
- is subjected to a further authentification operation (AUTₙ) for the purposes of establishing whether and by what amount the chip card money value was reduced.
- whereupon then in the evaluation unit (1) a money value contained in a charging meter (5) is increased by the same amount as that by which the chip card money value contained in the money value counter (4a) was reduced.
- wherein during the authentification operations a respective actual value answer signal is produced by means of a random signal which is associated with the authentification operation in question and which is supplied by the evaluation unit (1). on the chip card (4).
- which answer signal, besides a function of the random signal in question, is also a function inter alia, entirely or partially, of chip card identification details (14), the respective chip card money value still contained in the money value counter (4a) of the chip card (4), the chip card code key and an algorithm of the chip card (4). which all four are a part of the image thereof, and
- which signal during the authentification operations is respectively compared to a reference value answer signal which is produced in a similar manner in the evaluation unit (1) by the same random signal,
characterised in that
- provided on the chip card (4) is a switching arrangement (4b)
- which has at least a first, second, third and fourth state (00, 10, 11, 01).
- that in each of the authentification operations a respective state value of the switching arrangement (4b) which is precisely present at the beginning of the authentification operation is also taken into account in the production of the reference value and actual value answer signals so that the latter two are each also a function of said state value.
- that the first state (00) is in each case a defined initial state of the switching arrangement (4b) which is assumed by the latter after each switching-on (P_{On}) of the chip card feed.
- that the second state (10) is that which is assumed by the switching arrangement (4b) after triggering of the first authentification operation (AUT₀) and is produced on the chip card (4) at the end of a first random signal associated with the first authentification operation (AUT₀) when the switching arrangement (4b) is in the first state (00),
- that the third state (11) is that which is assumed by the switching arrangement (4b) after a first reduction (ΔGW₀) in the chip card money value, wherein the first reduction (ΔGW₀) is effected on the chip card (4) when the switching arrangement (4b) is in the second state (10), and
- that the fourth state (01) is that which is assumed by the switching arrangement (4b) after triggering of the further authentification operation (AUTₙ) and is produced on the chip card (4) at the end of a further random signal associated with the further authentification operation (AUTₙ) when the switching arrangement (4b) is in the third state (11).

2. A method according to claim 1 characterised in that in the second state (10) without changes in state of the switching arrangement (4b) additional authentification operations (AUT₁ to AUTₙ₋₁) can also be initiated by the evaluation unit (1). utilising the same chip card money value as in the first authentification operation (AUT₀).

3. A method according to claim 1 or claim 2 characterised in that in the third state (11) without changes in state of the switching arrangement (4b) additional reductions (ΔGW₁ to ΔGWₖ) in the chip card money value are also implemented by the evaluation unit (1).

4. A method according to one of claims 1 to 3 characterised in that when a further reduction (ΔGWₖ₊₁) in the chip card money value is implemented by the evaluation unit (1) in the fourth state (01) the switching arrangement (4b) previously again assumes the third state (11).

5. A method according to one of claims 1 to 4 characterised in that
- provided on each of the chip cards (4) is a respective feed switch-on counter (4c) whose count value (x) is respectively incremented by a value after the chip card feed is switched on at the beginning of the first following authentification operation (AUT₀) on the chip card (4) or shortly after triggering thereof on the chip card (4), and
- in the authentification operations (AUT₀ to AUTₙ₊ₘ) in each case the count value (x+1) applicable at that time is also taken into account in production of the reference value and actual value answer signals so that the latter two are each also a function of the applicable count value (x+1).

6. A method according to one of claims 1 to 5 characterised in that the automatic sales machines are automatic article or service sales machines.

7. A method according to claim 6 characterised in that the automatic service sales machines are telephone stations.

## Revendications

1. Procédé
- applicable dans l'utilisation d'une carte à puce (4) comme moyen de payement sans espèces dans des distributeurs automatiques,
- laquelle carte à puce (4), au début de l'utilisation,
- après la lecture d'une reproduction de la carte à puce (4) par un appareil d'évaluation (1) et
- après la déduction, effectuée dans cet appareil, d'une clé de code de la carte à puce,
- est soumise à une première authentification (AUT₀) en vue de la vérification de l'authenticité de la carte et
- qui, si l'authenticité de la carte a été reconnue, après au moins une réduction (ΔGW₀ ou ΔGWₖ), provoquée par une acquisition de marchandise ou de service, d'un solde de la carte, contenu dans un compteur de solde (4a) de la carte à puce (4),
- est soumise à une authentification (AUTₙ)-supplémentaire pour constater si et de quel montant le solde de la carte a été réduit,
- après quoi une somme contenue dans un compteur d'imputations (5) prévu dans l'appareil d'évaluation (1), est augmentée du même montant que celui dont le solde de la carte, contenu dans le compteur de solde (4a) de la carte à puce (4), a été réduit,
- un signal de réponse de valeur réelle étant généré chaque fois sur la carte à puce (4), pendant les authentifications, au moyen d'un signal aléatoire coordonné à l'authentification concernée et fourni par l'appareil d'évaluation (1),
- signal de réponse qui est fonction, outre du signal aléatoire concerné, notamment, complètement ou partiellement, d'indications d'identification (14) de la carte, du solde de la carte encore contenu dans le compteur de solde (4a) de la carte à puce (4), de la clé de code de carte et d'un algorithme de la carte à puce (4), lesquels font tous les quatre partie de la reproduction de la carte à puce (4), et
- qui, pendant les authentifications, est comparé chaque fois avec un signal de réponse de valeur prescrite, généré de façon analogue dans l'appareil d'évaluation (1) par le même signal aléatoire,
caractérisé en ce
- qu'un dispositif de commutation (4b) est présent sur la carte à puce (4),
- dispositif qui présente au moins un premier, deuxième, troisième et quatrième état (00, 10, 11, 01),
- que, lors des authentifications, il est également tenu compte d'une valeur d'état du dispositif de commutation (4b), existant chaque fois au moment auquel commence une authentification, dans la génération des signaux de réponse de valeur prescrite et de valeur réelle, de sorte que ces deux signaux de réponse sont chacun également fonction de cette valeur d'état,
- que le premier état (00) est chaque fois un état initial défini du dispositif de commutation (4b), état qui est pris par ce dispositif après chaque enclenchement (Pₒₙ) de l'alimentation de la carte à puce,
- que le deuxième état (10) est celui pris par le dispositif de commutation (4b) après le déclenchement de la première authentification (AUT₀) et généré sur la carte à puce (4) à la fin d'un premier signal aléatoire coordonné à la première authentification (AUT₀) lorsque le dispositif de commutation (4b) se trouve dans le premier état (00),
- que le troisième état (11) est celui pris par le dispositif de commutation (4b) après une première réduction (ΔGW₀) du solde de la carte, la première réduction (ΔGW₀) étant effectuée sur la carte à puce (4) lorsque le dispositif de commutation (4b) se trouve dans le deuxième état (10), et
- que le quatrième état (01) est celui pris par le dispositif de commutation (4b) après le déclenchement de l'authentification (AUTₙ) supplémentaire et généré sur la carte à puce (4) à la fin d'un signal aléatoire supplémentaire coordonné à l'authentification (AUTₙ) supplémentaire lorsque le dispositif de commutation (4b) se trouve dans le troisième état (11).

2. Procédé selon la revendication 1, caractérisé en ce que, dans le deuxième état (10), s'il n'y a pas eu de changements d'état du dispositif de commutation (4b), l'appareil d'évaluation (1) peut initialiser encore d'autres authentifications (AUT₁ à AUTₙ₋₁), avec utilisation du même solde de la carte que lors de la première authentification (AUT₀).

3. Procédé selon la revendication 1 ou 2, caractérisé en ce que, dans le troisième état (11), s'il n'y a pas eu de changements d'état du dispositif de commutation (4b), l'appareil d'évaluation (1) peut produire encore d'autres réductions (ΔGW₁ à ΔGWₖ) du solde de la carte.

4. Procédé selon une des revendications 1 à 3, caractérisé en ce que, si l'appareil d'évaluation (1) produit encore une autre réduction (ΔGWₖ₊₁) du solde de la carte alors que le dispositif de commutation (4b) est dans le quatrième état (01), ce dispositif reprend préalablement le troisième état (11).

5. Procédé selon une des revendications 1 à 4, caractérisé en ce
- qu'un compteur d'enclenchements d'alimentation (4c) est présent sur chacune des cartes à puce (4), compteur dont la valeur comptée (x) est incrémentée chaque fois d'une valeur après un enclenchement de l'alimentation de la carte, au début de la première authentification (AUT₀) suivante sur la carte ou peu avant son déclenchement sur la carte à puce (4), et
- qu'il est tenu compte chaque fois, dans les authentifications (AUT₀ à AUTₙ₊ₘ), de la valeur comptée (x+1) en vigueur à ce moment dans la génération des signaux de réponse de valeur prescrite et de valeur réelle, de sorte que ces deux signaux de réponse sont chacun également fonction de la valeur comptée (x+1) en vigueur.

6. Procédé selon une des revendications 1 à 5, caractérisé en ce que les distributeurs automatiques sont des distributeurs de marchandises ou de services.

7. Procédé selon la revendication 6, caractérisé en ce que les distributeurs automatiques de services sont des postes téléphoniques.
